# DEMANDE DE BREVET EUROPEEN

(11) **EP 3 163 723 A1**
(43) Date de publication de la demande: **03.05.2017**
(21) Numéro de dépôt: 16195871.5
(22) Date de dépôt: 26.10.2016
(51) Int. Cl.: H02K 11/01, H02K 21/22, H02K 7/14

(54) **MOTEUR ÉLECTRIQUE A COMMUTATION ÉLECTRONIQUE ET DISPOSITIF DE PULSION D'AIR CORRESPONDANT**

(30) Priorité: 29.10.2015 FR 1560361
(71) Demandeur: Valeo Systemes Thermiques, 78320 Le Mesnil Saint Denis (FR)
(72) Inventeur: CAPOULUN, Geoffroy, 78000 Versailles (FR); BALLAY, Eric, 78920 Ecquevilly (FR)
(74) Mandataire: Metz, Gaëlle

(57) **Abrégé**

Un moteur électrique à commutation électronique selon l'invention est notamment utilisé dans un dispositif de pulsion d'air et dans une installation de chauffage, ventilation et/ou climatisation d'un véhicule automobile.

Le moteur comprend un rotor (16) et un stator (14).

Le stator est monté sur un moyen de support (10) agencé en saillie d'une platine (12), métallique et connecté électriquement à une masse électrique.

Et un écran (34) est disposé entre le rotor et le stator, ledit écran étant également connecté électriquement à la masse électrique.

## Description

La présente invention se rapporte au domaine des moteurs électriques, et notamment à celui des moteurs à commutation électronique. Plus spécifiquement, elle concerne des dispositifs de pulsion d'air dans des véhicules automobiles comportant de tels moteurs électriques.

Un dispositif de pulsion d'air équipé d'un moteur électrique selon l'invention est, par exemple, utilisé dans un système de ventilation, de chauffage et/ou de climatisation d'un véhicule automobile.

Les moteurs électriques à commutation électronique, ou moteurs à courant continu sans balai (connu également sous la dénomination anglaise de « brushless »), comportent un ensemble rotor et stator, chacun de ces composants étant porteur d'éléments électromagnétiques dont l'interaction génère le déplacement du rotor relativement au stator et la mise en rotation d'un arbre d'entraînement porté par le rotor. La commutation de courant dans les bobines du stator génère des champs électriques qui peuvent perturber le fonctionnement d'autres appareils électroniques disposés à proximité.

Par ailleurs, le rotor est monté à rotation autour du stator par l'intermédiaire de la rotation de l'arbre d'entraînement dont il est solidaire. Le rotor et le stator sont montés indépendamment l'un de l'autre dans ledit moteur, et il convient de s'assurer que le positionnement relatif de ces deux composants est correct pour un fonctionnement optimal du moteur. On cherche à s'assurer que le rotor tourne autour du stator à une distance constante de celui-ci, ce qui implique que l'arbre d'entraînement soit sensiblement coaxial à l'axe de révolution de la pièce formant le stator. Il convient dès lors de porter une attention toute particulière aux roulements qui supportent la rotation de l'arbre d'entraînement.

On connaît des réalisations dans lesquelles au moins un roulement est placé dans un logement formé dans le carter du stator, ledit carter étant réalisé en plastique. Un tel agencement ne peut garantir une position stable des roulements, du fait de la dilatation thermique du matériau plastique. Le fait que l'un et/ou l'autre des logements des roulements puisse se déformer et faire bouger le roulement correspondant génère des déplacements de l'orientation de l'arbre d'entraînement qui peuvent être pénalisants pour le rendement optimal du moteur électrique.

La présente invention s'inscrit dans ce double contexte, c'est-à-dire la problématique de confinement des ondes électromagnétiques et la problématique de positionnement correct du stator et du rotor, étant entendu que ceci vise à proposer un moteur électrique et un dispositif de pulsion d'air associé dont le fonctionnement soit optimal et sans perturbations électromagnétiques des appareils disposés à proximité.

Par dispositif de pulsion d'air, on comprend un dispositif permettant d'aspirer et/ou de souffler de l'air.

Le moteur électrique à commutation électronique, ledit moteur comportant un stator monté sur un moyen de support et un rotor solidaire d'un arbre de sortie monté à rotation par rapport au stator et au moyen du support, fixe, par l'intermédiaire de roulements. Selon l'invention, un écran est disposé transversalement en regard d'une des faces du stator et cet écran comporte un logement apte à recevoir un desdits roulements.

Selon différentes caractéristiques de l'invention, prises seules ou en combinaison, on pourra prévoir que :
- l'écran est relié électriquement au moyen de support qui est connecté électriquement à une masse électrique ; cet agencement permet la formation d'une enceinte conductrice reliée à la masse électrique, et donc maintenue à un potentiel fixe, de manière à former un blindage apte à confiner au moins partiellement à l'intérieur du dispositif de pulsion d'air le champ électrique créé par la commutation de courant dans les bobines du stator génère des champs électriques ;
- l'écran s'étend radialement sur tout le diamètre du stator ;
- l'écran est percé en son centre d'un alésage pour être traversé par un arbre de sortie du moteur ;
- le logement est aménagé autour dudit alésage, ledit logement comportant une paroi de fond et un bord périphérique ;
- l'écran est agencé de manière à présenter plusieurs étages, dont au moins un étage formant partie de recouvrement et un étage formant le logement ;
- les étages sont reliés par un bord tombé, sensiblement parallèle à l'axe de révolution de l'écran ;
- l'écran comporte en outre un étage intermédiaire formant partie de fixation au stator ;
- la partie de fixation comporte un plateau muni d'au moins un trou de fixation ; avantageusement, le plateau est muni de trois trous de fixation régulièrement répartis angulairement ;
- l'écran est réalisé en un matériau métallique, conducteur électriquement ;
- l'écran est fixé sur le stator par au moins un moyen de fixation, notamment une vis de fixation, ou à titre d'exemple alternatif un rivet, traversant le stator pour être en prise sur le moyen de support ;
- deux écrans comportant chacun un logement apte à recevoir un desdits roulements, un premier écran étant disposé transversalement en regard de la face supérieure du stator tandis qu'un deuxième écran est disposé transversalement en regard de la face inférieure du stator ;
- les deux écrans sont fixés sur le stator par des mêmes moyens de fixation, et à titre d'exemple des vis de fixation, traversant le stator pour être en prise sur le moyen de support ;
- le moyen de support est relié à une platine qui forme un dissipateur thermique porteur d'une carte électronique de commande, notamment de l'alimentation des bobines du stator, la platine étant connectée électriquement à la masse électrique de la carte électronique de commande.

La présente invention concerne également un dispositif de pulsion d'air et une installation de chauffage, de ventilation et/ou de climatisation d'un véhicule automobile comprenant au moins un moteur électrique à commutation électronique conforme à ce qui vient d'être décrit précédemment.

D'autres caractéristiques et avantages de l'invention apparaîtront à la lecture de la description détaillée d'un mode de réalisation qui va suivre et pour la compréhension de laquelle on se reportera aux dessins annexés parmi lesquels :
- la figure 1 est une représentation en coupe d'un dispositif de pulsion selon un premier mode de réalisation de l'invention ;
- la figure 2 est une vue en perspective d'un écran de blindage équipant le dispositif de la figure 1 ;
- et la figure 3 est une représentation semblable à celle de la figure 1 d'un dispositif de pulsion d'air selon un deuxième mode de réalisation de l'invention.

Un dispositif de pulsion d'air 1, qui permet d'aspirer et de souffler de l'air, comporte au moins un moteur électrique à commutation électronique 2, apte à entraîner en rotation une roue de ventilation par l'intermédiaire d'un arbre de sortie 4 du moteur électrique. Un moyen de support 6 du moteur électrique 2 comporte une platine 8 de laquelle s'étend en saillie un fût 10 et qui porte une carte électronique de commande 12 dudit moteur électrique 2, ladite platine 8 formant en outre un moyen de refroidissement des composants dudit dispositif. Le moyen de support est ici décrit comme une pièce monobloc dans laquelle le fût 10 est venu de matière avec la platine 8, mais on comprendra qu'il pourrait s'agir de deux pièces indépendantes rapportées l'une sur l'autre.

Le moteur électrique 2 comporte principalement un stator 14 et un rotor 16, porteur de l'arbre de sortie 4. Le stator 14 est rendu solidaire du moyen de support 6, et le rotor 16 est agencé autour du stator 14 pour être entraîné en rotation sous l'effet des champs magnétiques générés par le bobinage et les aimants associés au rotor et au stator.

Le stator 14 présente une forme de révolution autour d'un axe principal X-X', sensiblement parallèle à l'axe de rotation du rotor. Le stator comporte notamment une partie centrale 17 de laquelle s'étendent en étoile une pluralité de branches, chaque branche étant apte à recevoir un enroulement de fil 18 formant bobine électromagnétique.

Le stator 14 présente une face périphérique 20 porteuse notamment de plaques métalliques aptes à coopérer avec un aimant permanent 22 du rotor 16, ainsi que deux faces transversales. On définit, à titre arbitraire, une orientation selon laquelle la face transversale du stator disposée en regard du rotor est la face transversale supérieure 24 et la face transversale du stator disposée en regard du moyen de support est la face transversale inférieure 26. La partie centrale 17 du stator comporte un alésage traversant s'étendant de la face transversale supérieure 24 à la face transversale inférieure 26 du stator 14.

Dans le dispositif de pulsion d'air 1 comportant le moteur électrique 2 selon l'invention, le stator 14 et le rotor 16 sont agencés de sorte que le rotor est disposé autour du stator, celui-ci étant disposé en regard de la platine 8.

Le fût 10 du moyen de support 6 s'étend en saillie d'une première face 28 de la platine 8, tandis que la carte électronique 12 est fixée sur une deuxième face opposée de cette platine. On comprend que de la sorte, lorsque les composants du dispositif sont montés, la carte électronique est tournée à l'opposé du moteur électrique. La platine est fixée mécaniquement par rapport à la structure du véhicule et elle est connectée électriquement à la masse de l'organe électronique.

Le moyen de support 6 présente une forme de révolution et la platine 8 s'étend dans un plan sensiblement perpendiculaire à cet axe de révolution du moyen de support 6. Le fût 10 et la platine 8 du moyen de support 6 sont traversés d'un canal interne 30 débouchant sensiblement au centre de la platine 8. On comprend que le moyen de support 6 permet la fixation du stator 14 et la réception de l'arbre de sortie moteur 4 solidaire du rotor 16, de sorte que ce moyen de support 6 participe au positionnement correct du rotor 16 par rapport au stator 14. Tel que cela a pu être précisé précédemment, le fût peut être fixé sur la platine par différents moyens et notamment des moyens de soudage, ou bien il peut être obtenu d'une seule pièce avec la platine.

De façon préférentielle, la platine 8 est en métal. Ainsi, la platine faisant office de dissipateur thermique peut refroidir efficacement l'organe électronique par conduction thermique. De plus, le fait que la platine soit réalisée en des matériaux conducteurs électriquement et qu'elle soit reliée à la masse électrique de l'organe électronique permet de bloquer au moins partiellement des rayonnements électromagnétiques émis par l'organe électronique, ces rayonnements pouvant perturber le fonctionnement du moteur électrique. Préférentiellement, la platine est en aluminium, de telle sorte que l'on associe pour ces pièces des caractéristiques de légèreté et de bonne conduction thermique. Le stator 14 est fixé sur le moyen de support 6, notamment, le stator 14 peut être vissé sur la paroi d'extrémité libre du fût 10, autour du canal interne 30, par l'intermédiaire de vis de fixation 32 dont l'effort de serrage permet le plaquage de la face inférieure du stator contre la paroi d'extrémité libre du fût.

Il est particulièrement notable selon l'invention que le moteur électrique 2 formé par le rotor 16 et le stator 14 comporte en outre un écran 34 formant moyen de blindage électromagnétique pour éviter la propagation des rayonnements électromagnétiques à l'extérieur du moteur et du dispositif de pulsion d'air.

L'écran 34 est disposé entre le rotor 16 et le stator 14, transversalement à l'arbre de sortie 4. Cet écran est réalisé dans un matériau conducteur électriquement, notamment en aluminium, et il est relié électriquement à la masse électrique. Afin de former un moyen de confinement, l'écran 34 s'étend transversalement sur tout le diamètre du stator et est fixé sur le stator.

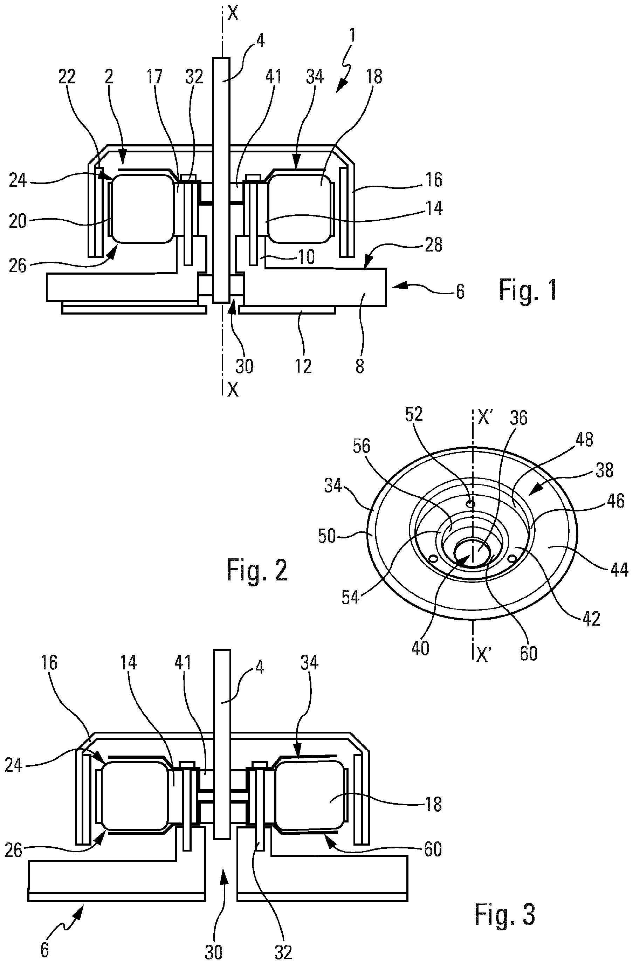

Sur la figure 2, l'écran 34 présente une forme de disque, percé en son centre d'un alésage 36 pour être traversé par l'arbre de sortie 4 du moteur. L'écran 34 est de forme de révolution autour d'un axe de révolution X-X' sensiblement parallèle à l'axe principal de révolution X-X du stator 14 lorsque le dispositif de pulsion d'air est assemblé.

Le disque présente au moins deux étages, c'est-à-dire deux parties fonctionnelles qui s'étendent à des hauteurs différentes l'une par rapport à l'autre selon l'axe de révolution X'-X'. Un premier étage consiste en une partie de recouvrement 38 du stator lorsque l'écran 34 est assemblé sur le stator 14 et un deuxième étage consiste en un logement 40 apte à recevoir un roulement 41, agencé autour de l'alésage 36.

Dans le mode de réalisation illustré, un étage intermédiaire est formé entre le premier et le deuxième étage qui consiste en un plateau de fixation 42 de l'écran 34 sur le stator 14. La partie de recouvrement 38 est formée par une paroi plane annulaire 44 dont le bord intérieur 46 est prolongé sensiblement perpendiculairement par un premier bord tombé 48 qui relie, parallèlement à l'axe de révolution X'-X' de l'écran, le premier étage à l'étage intermédiaire. La paroi plane annulaire 44 s'étend radialement entre le bord intérieur 46 et un bord extérieur 50, sur une distance permettant le recouvrement des bobines associées au stator 14. Tel qu'illustré, le bord extérieur 50 est dans le plan défini par la paroi plane annulaire 44, mais on comprendra qu'il pourrait être prolongé pour former une partie recourbée en bout de l'écran.

Le plateau de fixation 42 formant l'étage intermédiaire s'étend dans le prolongement du premier bord tombé 48 et il s'étend sensiblement parallèlement à la paroi plane annulaire 44 de la partie de recouvrement 38. Le plateau de fixation 42 prolonge radialement la partie de recouvrement vers le centre de l'écran 34. Au moins un trou de fixation 52 est réalisé dans le plateau de fixation 42, et on prévoit avantageusement trois trous de fixation régulièrement répartis à 120°.

Le plateau de fixation 42 présente également une forme annulaire dont le bord intérieur 54 est prolongé sensiblement perpendiculairement par un deuxième bord tombé 56 qui relie, parallèlement à l'axe de révolution X'-X' de l'écran, l'étage intermédiaire au deuxième étage. Le plateau de fixation s'étend radialement entre le bord intérieur 54 et le premier bord tombé 48, sur une distance permettant l'appui de l'écran sur le stator pour sa fixation via les trous de fixation 52.

Le logement 40 formant le deuxième étage est obtenu par le deuxième bord tombé 56 et une paroi de fond 58, percé en son centre pour laisser passage à l'arbre de sortie du moteur lorsque l'écran 34 est rapporté sur le stator 14. La paroi de fond 58 et le deuxième bord tombé 56 délimitent une cavité ouverte sur le dessus pour former le logement 40, le deuxième bord tombé 56 formant la paroi périphérique du logement contre laquelle la bague extérieure du roulement 41 vient reposer. On comprend ainsi que le logement 40 est dimensionné en fonction de la dimension du roulement à loger dans la cavité. On pourra prévoir de réaliser dans ce logement, dans la paroi périphérique formée par le deuxième bord tombé 56, une gorge, ici non représentée, apte à recevoir une bague élastique de maintien en position du roulement dans le logement.

L'écran 34 tel qu'il vient d'être décrit, c'est-à-dire avec une pluralité d'étages formant au moins une partie de recouvrement transversal du stator, une partie de fixation au stator et une partie de logement d'un roulement, est réalisé par emboutissage d'une plaque métallique, notamment d'aluminium.

On va maintenant décrire le montage d'un tel écran et d'un roulement associé sur un stator d'un moteur électrique.

L'écran 34 est amené en regard de la face supérieure 24 du stator, de manière à ce que les trous 52 de fixation de l'écran soient disposés au droit des trous de fixation taraudés aménagés dans le stator 14. Des vis de fixation 32 sont insérées dans ces différents trous superposés et elles coopèrent avec les trous taraudés pour que la tête de vis plaque le stator 14, et l'écran 34 contre le moyen de support 6. La bague extérieure du roulement 41 est alors disposée dans le logement, plaquée contre la paroi de fond 58. Ce roulement 41 peut être un roulement à billes, un roulement à rouleaux, à aiguilles, ou autres. Un deuxième roulement est logé dans le moyen de support 6 pour réaliser le guidage en rotation de l'arbre de sortie.

Par ailleurs, le vissage de l'écran 34 et du stator 14 sur le moyen de support participe à la mise à la masse électrique de l'écran, le corps de vis étant en contact avec le moyen de support lui-même relié à la masse électrique tandis que la tête de vis est plaquée contre l'écran. On forme ainsi, par la présence de l'écran métallique relié à un potentiel électrique constant, sensiblement nul, un moyen de blindage évitant la diffusion d'ondes électromagnétiques, et il est intéressant de noter que la partie de recouvrement 38 est bordée vers l'intérieur de l'écran 34 par le premier bord tombé 48 qui forme un mur limitant la propagation des ondes électromagnétiques à l'extérieur du moteur par le centre de l'écran.

On va maintenant décrire un deuxième mode de réalisation d'un moteur électrique à commutation électronique, qui diffère du premier mode de réalisation précédemment décrit en ce que deux écrans transversaux sont disposés en regard du stator pour former moyen de blindage électromagnétique, un premier écran 34 en regard de la face transversale supérieure 24 du stator comme précédemment, et un deuxième écran 60 en regard cette fois de la face transversale inférieure 26 du stator, c'est-à-dire entre le stator 14 et le moyen de support 6.

Ce deuxième écran 60 est semblable au premier écran 34, dans son agencement à étages. On comprend que le deuxième écran 60 prend en regard de la face transversale inférieure 26 une disposition inverse à celle du premier écran, pour que comme celui-ci, la partie de recouvrement soit dégagée axialement de l'enroulement de fil 18. Les trous de fixation présents dans le plateau de fixation du deuxième écran 60 sont disposés au droit des trous de fixation 52 du premier écran 34 et des trous de fixation du stator pour être traversés par les mêmes vis de fixation 32 qui relient le premier écran 34 et le stator. Le vissage des vis de fixation 32 participent à l'enserrage du deuxième écran 60 entre la face inférieure 26 du stator et le moyen de support 6, permettant d'une part sa fixation et d'autre part sa mise à la masse.

La description qui précède vise à expliquer comment l'invention permet d'atteindre les objectifs qu'elle s'est fixés et notamment de proposer un moteur électrique à commutation électronique et un dispositif de pulsion d'air associé dans lesquels on confine les rayonnements électromagnétiques, par l'élaboration de moyens de confinement simples à fabriquer, simples à monter et particulièrement efficaces, et qui permet en outre l'intégration d'une fonction de positionnement relatif du stator et du rotor, par intégration d'une fonction de support d'au moins un roulement de guidage en rotation de l'arbre d'entraînement solidaire du rotor. Toutefois, l'invention n'est pas limitée aux seuls moteurs et dispositifs de pulsion d'air conformes aux modes de réalisation explicitement décrits en regard des figures, étant entendu que des variantes de réalisation pourraient être mises en place sans sortir du contexte de l'invention, dès lors qu'un confinement transversal des rayonnements électromagnétiques est rendu possible par la mise à la masse d'un écran métallique disposé entre le rotor et le stator d'un moteur électrique, notamment à commutation électronique, et que cet écran intègre des moyens de tenue d'un roulement de guidage d'un arbre d'entraînement.

## Revendications

1. Moteur électrique (2) à commutation électronique, ledit moteur comportant un stator (14) monté sur un moyen de support (6) et un rotor (16) solidaire d'un arbre de sortie (4) monté à rotation par rapport au stator et au moyen de support (6) par l'intermédiaire de roulements (41),
**caractérisé en ce qu'**au moins un écran (34, 60) est disposé transversalement en regard d'une des faces (24, 26) du stator (14) et **en ce que** ledit écran comporte un logement (40) apte à recevoir un desdits roulements (41).

2. Moteur selon la revendication 1, **caractérisé en ce que** l'écran (34, 60) est relié électriquement au moyen de support (6) qui est connecté électriquement à une masse électrique.

3. Moteur selon l'une des revendications 1 ou 2, **caractérisé en ce que** ledit écran (34, 60) s'étend radialement sur tout le diamètre du stator (14).

4. Moteur selon l'une des revendications 1 à 3, **caractérisé en ce que** ledit écran (34, 60) est percé en son centre d'un alésage (36) pour être traversé par l'arbre de sortie (4) du moteur.

5. Moteur selon la revendication précédente, **caractérisé en ce que** le logement (40) est aménagé autour dudit alésage (36), ledit logement (40) comportant une paroi de fond (58) et un bord périphérique (56).

6. Moteur selon la revendication précédente, **caractérisé en ce que** l'écran (34, 60) est agencé de manière à présenter plusieurs étages, dont au moins un étage formant partie de recouvrement (38) et un étage formant le logement (40).

7. Moteur selon la revendication précédente, **caractérisé en ce que** les étages sont reliés par un bord tombé (48, 56), sensiblement parallèle à l'axe de révolution (X'-X') de l'écran (34, 60).

8. Moteur selon la revendication précédente, **caractérisé en ce que** l'écran (34, 60) comporte en outre un étage intermédiaire formant partie de fixation au stator (14).

9. Moteur selon l'une des revendications précédentes, **caractérisé en ce que** l'écran (34, 60) est fixé sur le stator (14) par au moins un moyen de fixation (32) traversant le stator (14) pour être en prise sur le moyen de support (6).

10. Moteur selon l'une des revendications précédentes, **caractérisé en ce qu'**il comporte deux écrans (34, 60) comportant un logement (40) apte à recevoir un desdits roulements (41), un premier écran (34) étant disposé transversalement en regard de la face supérieure (24) du stator (14) tandis qu'un deuxième écran (60) est disposé transversalement en regard de la face inférieure (26) du stator.

11. Moteur selon la revendication précédente, **caractérisé en ce que** les deux écrans (34, 60) sont fixés sur le stator (14) par des mêmes moyens de fixation (32), traversant le stator pour être en prise sur le moyen de support (6).

12. Moteur selon l'une des revendications précédentes, **caractérisé en ce que** le moyen de support (6) est relié à une platine (8) qui forme un dissipateur thermique porteur d'une carte électronique de commande (12), notamment de l'alimentation des bobines du stator, la platine étant connectée électriquement à la masse électrique de la carte électronique de commande.

13. Dispositif de pulsion d'air comprenant au moins un moteur électrique à commutation électronique selon l'une des revendications précédentes.

14. Installation de chauffage, de ventilation et/ou de climatisation d'un véhicule automobile comprenant au moins un dispositif de pulsion d'air (1) selon la revendication précédente.
